# EUROPEAN PATENT SPECIFICATION

(11) **EP 3 789 567 B1**
(45) Date of publication and mention of the grant of the patent: **28.07.2021**
(21) Application number: 20194449.3
(22) Date of filing: 03.09.2020
(51) Int. Cl.: E04H 9/02, E04B 1/41, E04B 1/58, E04C 5/12, E04C 5/16

(54) **ANCHOR ROD COUPLING JOINT**
ANKERSTANGENKUPPLUNGSGELENK
JOINT DE COUPLAGE D'UNE TIGE D'ANCRAGE

(30) Priority: 05.09.2019 GB 201912810
(43) Date of publication of application: 10.03.2021
(73) Proprietor: CINTEC INTERNATIONAL LIMITED, Newport, Gwent NP20 4PH (GB)
(72) Inventor: HOPKINS, Andrew Charles, Vale of Glamorgan, South Wales CF71 7LH (GB); SOE, Shwe, Cardiff, South Wales CF3 0LS (GB)
(74) Representative: Wynne-Jones IP Limited

(56) References cited:
- WO-A1-92/08019
- WO-A1-2014/000038
- CN-B- 107 476 434
- FR-A1- 2 558 904
- US-A1- 2018 335 061

## Description

This invention relates to wall anchor systems which utilise anchor rods and anchors to secure structural features of buildings, such as walls. Known anchor rod coupling joints are for example decribed in US 2018/335061 A1, WO 2014/000038 A1 and WO 92/08019 A1. In particular this invention relates to wall anchor systems with a central coupler for securing structural features of buildings, which are located in areas of high seismic activity, to further secure them against damage from e.g. earthquakes.

As buildings age, the structure of the outer walls can weaken, and the weight of the roof and/or upper walls can become too heavy for the lower walls which leads to the walls bowing outwardly, and thus an inevitable reduction in the structural integrity of the building as a whole. There are various solutions for preventing the structural decay of the buildings known in the art. One example is to install a wall anchor to support the walls. A wall anchor is typically comprised of a long anchor rod with threaded ends and two end plates which are attached to the end of the anchor rod on the outside of a building. The end plates are tightened on to the anchor rod at each end and tensioned by nuts to exert a force on the wall and therefore provide structural support, by helping to minimise any outward bowing of the walls. It is typically a requirement for the anchor rod to pass through the whole building. In some cases the anchor rod is passed through a room in free space; however it is often desirable to conceal the anchor rod within a wall or the ceiling of a building as they can be unsightly, thus requiring a bore hole to be drilled through the entirety of the building for the anchor rod to pass. The anchor rod is then passed through the bore hole and the plates affixed at either end.

However, wall anchors can be a detriment to the structural integrity of a building under certain circumstances. Within regions of high seismic activity and unstable geology, the wall anchors increase the likelihood of damage in the event of serious tremors arising from a major earthquake or landslide, for example. It is a known solution for preventing damage from tremors, particularly in rectangular or square buildings, to insert anchor rods both lengthways and widthways across a building, thereby stiffening the building and protecting it against damage caused by tremors. However, it is often the case that the anchor rods and anchors are much stronger than the building being supported and, during severe tremors, the anchor rods remain in place as the building moves around them causing additional damage to the walls. Damage such as total wall collapse and diagonal cracking is common in buildings which have anchor rods installed. Diagonal cracking in particular can cause major damage even if the building remains upright following the earthquake.

One solution to this problem is to install a coupler within the anchor rod, as is detailed in PCT Application WO2011/030105 filed by the present applicants. The coupler allows for some lateral movement of the rod which can provide additional tolerance to the movement of the walls and prevent additional damage. In addition to providing a tolerance, the coupler has a fail safe pin which snaps under extreme stress and separates the two ends of the anchor rods, thus slackening the tension entirely. However, the system detailed is cumbersome to manufacture, with many additional parts required, and difficult to install. The device is large and rectangular in shape, meaning that it cannot be passed down a bore hole that would fit a typical anchor rod, and therefore requires either a much larger bore hole to be drilled, which can cause unnecessary damage to a wall, or a section of wall must be removed to install it, which can be , inconvenient.

It is therefore the objective of this invention to provide a technical solution at least some of these problems.

In accordance with a first aspect of the present application, there is provided an anchor rod coupling joint for coupling anchor rods; the anchor rod coupling joint comprises: a first joint member comprising a body having a first diameter and a second joint member comprising a second body having a second diameter. The first diameter is less than the second diameter such that the first joint member is arranged to frictionally engage within said second joint member. The anchor rod coupling joint also comprises a compression sleeve, at least a portion of the second joint member being arranged to frictionally engage within the compression sleeve. Additionally said second joint member further comprises a hole which extends through the second body and the first joint member also comprises a elongate channel which extends radially through the body and axially along the body. Also the joint further comprises a stopping pin which extends through the hole and the elongate channel for limiting relative movement of the first and second joint members along a longitudinal axis of the joint to the distance defined by the length of the slot; furthermore the first and second joint members are arranged to receive and couple with anchoring rods.
A further anchor rod coupling joint wherein the first and second joint members and the compression sleeve are optionally substantially cylindrical in shape, and wherein the diameter of the compression sleeve can optionally be selected to provide a required frictional force.
A further anchor rod coupling joint, wherein the pin can be formed of a frangible material designed to break when subjected to a predefined force threshold and optionally wherein the material and diameter of the pin can be selected to provide different force tolerances. Optionally the breaking force can be provided by relative movement of the joint members, when at maximum extension or compression.

An anchor system incorporating the anchor rod coupling joint previously described herein.
Figure 1 illustrates an exploded view of an anchor rod coupling joint according to an exemplary embodiment of the present invention;
Figure 2 illustrates a perspective cross-sectional perspective view of the anchor rod coupling joint of figure 1 in a first configuration;
Figure 3 illustrates a perspective cross-sectional perspective view of the anchor rod coupling joint of figure 1 in a second configuration; and,
Figure 4 illustrates a cross-sectional view of an alternative embodiment of an anchor rod coupling joint further comprising an air gap.

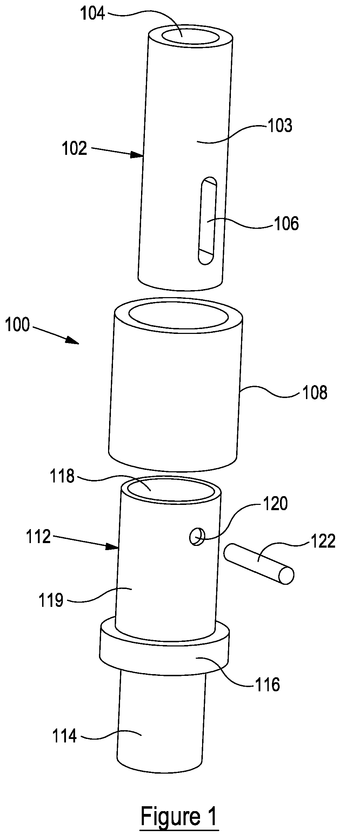

Referring to Figures 1, 2 and 3 of the drawings, there is illustrated an anchor rod coupling joint 100 according to an embodiment of the present invention. The coupling joint 100 is comprised of a first joint member 102, having a first diameter, and a second, anchor joint member 112 having a second diameter. The first diameter is smaller than the second diameter and the first joint member 102 is arranged to slide within the second joint member 112, such that when joined together, the first and second joint members 102, 112 define a slidable couple joint 100. The generally cylindrical shape of the couple joint 100 allows it to passed down a bore hole through a building with little difficulty. The total diameter of the joint 100 can be selected to be substantially close to the diameter of the tie rods, such that a much larger bore hole is not required during use.

The first, inner, joint member 102 is comprised of a substantially cylindrical body 103 having first and second ends. At the first end thereof there is a substantially hollow region 104 for accepting the end of an anchor rod (not shown). The hollow region 104 extends approximately 50% of the length of the body of the joint member 102, although different lengths of receiving region 104 can be selected dependent on the length of the threaded head of the anchor rod. The inner wall of the receiving region 104 is threaded (not illustrated) to receive and secure an externally threaded end of an anchor rod when oriented for use.

The first joint member 102 has a diameter which is less than that of the second joint member 112 such that the second end thereof can be inserted within a coupling region 118 of the second member 112. The first joint member 102 additionally comprises an elongate channel 106 formed within the body 103, which extends axially towards the second end thereof, from a position substantially midway between the first and second ends of the body 103. The length of the elongate channel 106 can be selected to provide different tolerances, wherein a longer channel 106 increases the movement tolerance of the couple joint 100, and a shorter channel 106 decreases the movement tolerance of the couple joint 100, in use. The elongate channel 106 defines a hollow passage passing through the total width of the first member 102, through which a pin 122 can be passed when the couple joint 100 is arranged for use. The ends of the channel 106 can be rounded to accommodate a round pin 122, or alternatively the shape of the ends of the elongate channel 106 can be selected to accommodate a pin 122 of a different shape. The width of the elongate channel 106 is selected to accommodate different pin 122 widths, and can be selected based on tolerance requirements.

The second member 112 is comprised of a generally cylindrical second body with three distinct regions; at a first end, an anchor receiving region 114 which is provided for receiving an anchor rod; at a second end, a coupling region 119 which is arranged to couple with and receive the first member 102; and a collar 116 defining a circumferential wall between the coupling region 119 and the anchor receiving region 114.

The anchor receiving region 114 is comprised of a substantially hollow receiving cavity 124 for receiving the threaded end of an anchor rod. The inner wall of the receiving cavity 124 is threaded (not shown) to couple with an external thread of an anchor rod, in use. The receiving cavity 124 extends the whole length of the anchor receiving region 114, up to the collar 116.

The coupling region 119 has a diameter greater than that of the diameter of the first member 102. The coupling region defines a substantially hollow cavity 118 for receiving the first member 102, in use. The coupling region extends from the collar 116, with a length equal to or longer than the midpoint of the first member 102, such that the elongate channel 106 can be fully inserted within the hollow cavity 118 of the coupling region 119. The coupling region 119 additionally comprises a pair of pin holes 120, diametrically positioned within the coupling region 119, for receiving a pin 122 therethrough.

When oriented for use, the first member 102 is inserted into the hollow cavity 118 of the second member 112, forming the couple joint 100. Once coupled, the pin 122 is inserted through a first of the pin holes 120 on one side of the second member 112, through the elongate channel 106 of the first member 102and into a second pin hole disposed on the diametrically opposite side of the second member 112.

The pin 122 is formed of a frangible material which breaks if placed under a predefined threshold of force. The pin 112 prevents relative longitudinal movement of the first 102 and second 112 members beyond a threshold range, namely the length of the elongate channel 106, thus defining the distance that the joint members 102, 112 can slide relative to each other during use. Should the two joint members 102, 112 be pulled apart or pushed together with excess force, the pin 122 is designed to break and allow the two joint members 102, 112 to de-couple and move apart. Once de-coupled, the anchor rods which are affixed to a building slacken, thus reducing the damage to the building. The material and diameter of the pin 122 can be selected to define different force thresholds which will need to be overcome to break the pin 122, thus defining the tolerance of the joint 100.

The joint 100 additionally comprises a compression sleeve 108 which is placed over the coupled joint members 102, 112 when arranged for use. The compression sleeve 108 has an inner diameter which is selected to be substantially close to the outer diameter of the coupling region 119 of the second joint member 112 such that when it is placed over the joint members 102, 112 it exerts frictional force, securing the two members 102, 112 together. The force that the compression sleeve 108 exerts on the joint members 102, 112 provides a resistive force, resisting relative movement of the joint members 102, 112 along the longitudinal axis. The diameter of the compression sleeve 108 can be selected to provide different levels of compression and therefore provide a different inward frictional force on the joint members 102, 112 to obtain different levels of tolerance in relative movement of the joint members 102, 112. Alternatively, the compression sleeve 108 may comprise a tapered internal surface to provide the resistive force on the joint members 102, 112.

The compression sleeve 108 has a length equal to, or shorter than, the length of the coupling region 119 of the second member 112, such that when it is arranged for use, it does not extend above the end of the coupling region 119. The compression sleeve 108 is limited in the distance it can traverse the second joint member 112 by the collar 116.

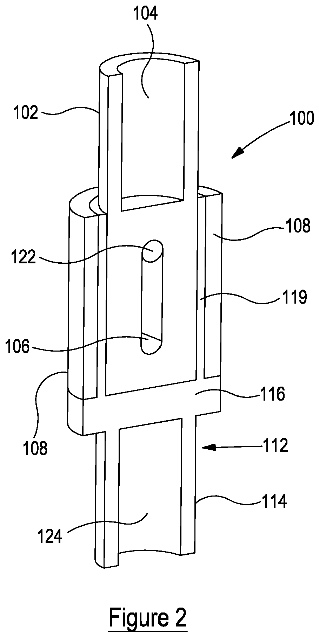

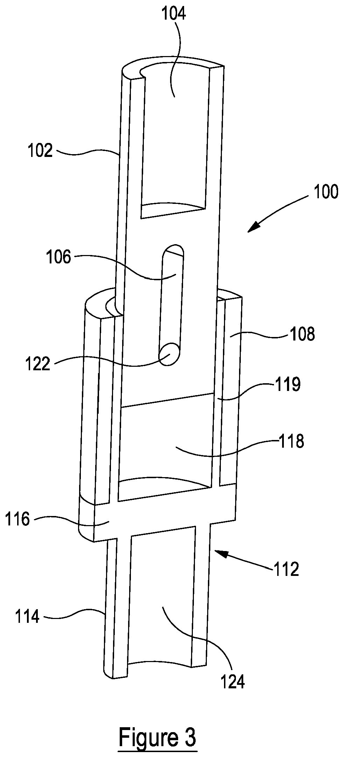

Referring specifically to Figures 2 and 3 of the drawings there is illustrated an exemplary embodiment of the present invention when arranged for use. Figure 2 illustrates an exemplary embodiment of the present invention in a first, fully closed, configuration. Figure 3 illustrates an exemplary embodiment of the present invention in a second, fully open, configuration.

Referring now specifically to Figure 2, there is illustrated a cross-sectional view of an exemplary embodiment of the present invention when oriented for use in the fully closed. When the couple joint 100 is fully closed, the second end of the inner joint member 102 is in contact with a base of the hollow receiving region 118 of the second member 112. Additionally, the pin 122 is in contact with the proximal end of the elongate channel 106. In such a configuration, when the joint 100 is fully closed, there is no pressure exerted on the pin 122 which would cause it to break, as the movement of the joint members 102, 112 is limited by the depth of the hollow cavity 118. As such, the joint members 102, 112 can only move away from each other.

Referring now specifically to Figure 3 of the drawings there is illustrated a cross-sectional view of an exemplary embodiment of the present invention when oriented for use, in the fully open position. When the couple joint 100 is fully open, the inner joint member 102 is at a maximum distance from the medial end of the hollow receiving region 118 of the second joint member 112. The maximum distance is defined at the point where the pin 122 comes into contact with the distal end of the elongate channel 106. In such a configuration if any relative separation movement of the first and second joint members 102, 112 occurs, a force is imparted on the pin 122. If the force is above a certain threshold, then the pin 122 is designed to sheer under the force and allow the first and second joint members 102, 112 to come apart.

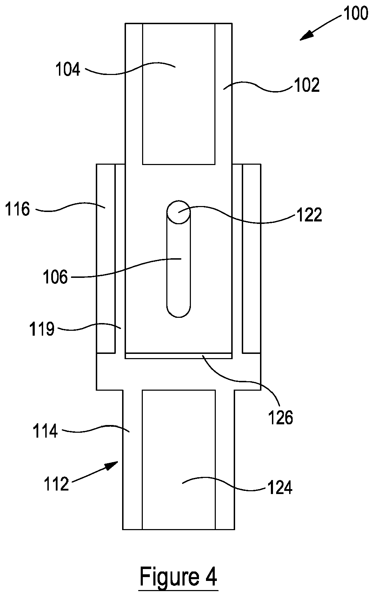

Figure 4 illustrates an alternative embodiment of the present invention. In an alternative embodiment of the present invention, the length of the elongate channel 106 has been selected such that when the joint 100 is fully closed, and the pin 122 is in contact with the proximal end of the elongate channel 106, preventing further relative movement thereof, there is a gap 126 between the end of the first member 102 and the base of the hollow receiving cavity 118 of the second joint member 112.

In such a configuration, should relative movement of the first and second joint members 102, 112 cause them to move together with excessive force, then the pin 122 will sheer and the joint members 102, 112 will move toward each other, thereby relieving the stresses on the anchor rod.

## Claims

1. An anchor rod coupling joint (100) for coupling anchor rods; said anchor rod coupling joint (100) comprising:
a first joint member (102) comprising a body (103) having a first diameter;
a second joint member (112) comprising a second body having a second diameter,
the first diameter being less than the second diameter such that the first joint member (102) is arranged to frictionally engage within said second joint member (112); a compression sleeve (108), at least a portion of the second joint member (112) being arranged to frictionally engage within the compression sleeve (108),
wherein, said second joint member (112) further comprises a hole (120) which extends through the second body and wherein said first joint member (102) comprises an elongate channel (106) which extends axially along the body (103), the joint (100) further comprising a pin (122) which extends through the hole (120) and the elongate channel (106) for limiting relative movement of the first and second joint members along a longitudinal axis thereof, the first and second joint members being arranged to receive and couple with anchoring rods.

2. An anchor rod coupling joint (100) according to claim 1, wherein the first and second joint members (102; 112) and the compression sleeve (108) are substantially cylindrical in shape.

3. An anchor rod coupling joint (100) according to claim 2, wherein the diameter of the compression sleeve (108) can be selected to provide a required frictional force.

4. An anchor rod coupling joint (100) according to any of claims 1 to 3, wherein the pin (122) is formed of a frangible material designed to break when subjected to a predefined force threshold.

5. An anchor rod coupling joint (100) according to claim 4 wherein the material and diameter of the pin (122) can be selected to provide different force tolerances.

6. An anchor rod coupling joint (100) according to claim 4 or 5, wherein the breaking force is provided by relative movement of the joint members, when at maximum extension or compression.

7. An anchor system incorporating the anchor rod coupling joint (100) of claims 1 to 6.

## Patentansprüche

1. Ankerstangenkopplungsverbindung (100) zum Koppeln von Ankerstangen; wobei die Ankerstangenkopplungsverbindung (100) Folgendes umfasst:
ein erstes Verbindungselement (102), das einen Körper (103) umfasst, der einen ersten Durchmesser aufweist;
ein zweites Verbindungselement (112), das einen zweiten Körper umfasst, der einen zweiten Durchmesser aufweist,
wobei der erste Durchmesser derart geringer als der zweite Durchmesser ist, dass das erste Verbindungselement (102) angeordnet ist, um innerhalb des zweiten Verbindungselements (112) reibschlüssig einzugreifen;
eine Kompressionshülse (108), wobei wenigstens ein Abschnitt des zweiten Verbindungselements (112) angeordnet ist, um innerhalb der Kompressionshülse (108) reibschlüssig einzugreifen,
wobei das zweite Verbindungselement (112) ferner ein Loch (120) umfasst, das sich durch den zweiten Körper erstreckt, und wobei das erste Verbindungselement (102) einen länglichen Kanal (106) umfasst, der sich entlang des Körpers (103) axial erstreckt, wobei die Verbindung (100) ferner einen Stift (122) umfasst, der sich durch das Loch (120) und den länglichen Kanal (106) zum Begrenzen einer Relativbewegung des ersten und des zweiten Verbindungselements entlang einer Längsachse davon erstreckt, wobei das erste und das zweite Verbindungselement angeordnet sind, um Verankerungsstangen zu empfangen und mit diesen zu koppeln.

2. Ankerstangenkopplungsverbindung (100) nach Anspruch 1, wobei das erste und das zweite Verbindungselement (102; 112) und die Kompressionshülse (108) im Wesentlichen eine zylindrische Form aufweisen.

3. Ankerstangenkopplungsverbindung (100) nach Anspruch 2, wobei der Durchmesser der Kompressionshülse (108) ausgewählt werden kann, um eine erforderliche Reibungskraft bereitzustellen.

4. Ankerstangenkopplungsverbindung (100) nach einem der Ansprüche 1 bis 3, wobei der Stift (122) aus einem zerbrechlichen Material ausgebildet ist, das ausgelegt ist zu brechen, wenn es einem vordefinierten Kraftschwellenwert ausgesetzt wird.

5. Ankerstangenkopplungsverbindung (100) nach Anspruch 4, wobei das Material und der Durchmesser des Stifts (122) ausgewählt werden können, um unterschiedliche Krafttoleranzen bereitzustellen.

6. Ankerstangenkopplungsverbindung (100) nach Anspruch 4 oder 5, wobei die Bruchkraft durch die Relativbewegung der Verbindungselemente bei einer maximalen Erstreckung oder Kompression bereitgestellt wird.

7. Ankersystem, das die Ankerstangenkopplungsverbindung (100) nach den Ansprüchen 1 bis 6 enthält.

## Revendications

1. Joint d'accouplement de tige d'ancrage (100) permettant l'accouplement de tiges d'ancrage ; ledit joint d'accouplement de tige d'ancrage (100) comprenant :
un premier élément de joint (102) comprenant un corps (103) ayant un premier diamètre ;
un second élément de joint (112) comprenant un second corps ayant un second diamètre,
le premier diamètre étant inférieur au second diamètre de telle sorte que le premier élément de joint (102) est disposé pour entrer en prise par frottement dans ledit second élément de joint (112) ;
un manchon de compression (108), au moins une partie du second élément de joint (112) étant disposée pour entrer en prise par frottement dans le manchon de compression (108),
ledit second élément de joint (112) comprenant en outre un trou (120) qui s'étend à travers le second corps et,
ledit premier élément de joint (102) comprenant un canal allongé (106) qui s'étend axialement le long du corps (103),
le joint (100) comprenant en outre une broche (122) qui s'étend à travers le trou (120) et le canal allongé (106) permettant la limitation du mouvement relatif des premier et second éléments de joint le long d'un axe longitudinal de ceux-ci, les premier et second éléments de joint étant disposés de manière à recevoir les tiges d'ancrage et s'accoupler avec celles-ci.

2. Joint d'accouplement de tige d'ancrage (100) selon la revendication 1, les premier et second éléments de joint (102 ; 112) et le manchon de compression (108) étant de forme sensiblement cylindrique.

3. Joint d'accouplement de tige d'ancrage (100) selon la revendication 2, le diamètre du manchon de compression (108) pouvant être sélectionné pour fournir une force de frottement requise.

4. Joint d'accouplement de tige d'ancrage (100) selon l'une quelconque des revendications 1 à 3, la broche (122) étant formée d'un matériau cassable conçu pour se rompre lorsqu'il est soumis à un seuil de force prédéfini.

5. Joint d'accouplement de tige d'ancrage (100) selon la revendication 4, le matériau et le diamètre de la broche (122) pouvant être sélectionnés pour fournir différentes tolérances de force.

6. Joint d'accouplement de tige d'ancrage (100) selon la revendication 4 ou 5, la force de rupture étant fournie par le mouvement relatif des éléments de joint, lorsqu'ils atteignent un niveau d'extension ou de compression maximal.

7. Système d'ancrage incorporant le joint d'accouplement de tige d'ancrage (100) des revendications 1 à 6.
